# EUROPEAN PATENT SPECIFICATION

(11) **EP 0 900 316 B1**
(45) Date of publication and mention of the grant of the patent: **24.03.2004**
(21) Application number: 97919300.0
(22) Date of filing: 24.04.1997
(51) Int. Cl.: E06B 11/02

(54) **CHILD SAFETY BARRIER**
SICHERHEITSBARRIERE FÜR KINDER
BARRIERE DE SECURITE POUR ENFANTS

(30) Priority: 24.04.1996 DK 49496
(43) Date of publication of application: 10.03.1999
(60) Divisional application: 03010107.5
(73) Proprietor: Baby Dan A/S, 8670 Lasby (DK)
(72) Inventor: Andersen, Finn, 8670 Lasby (DK)
(74) Representative: Larsen, Hans Ole
(86) International application number: PCT/DK1997/000190
(87) International publication number: WO 1997/040253

(56) References cited:
- DE-A- 2 056 168
- GB-A- 2 088 939
- GB-A- 2 157 350
- GB-A- 2 175 338
- GB-A- 2 179 389
- GB-A- 2 216 939

## Description

The present invention relates to a child safety barrier comprising an upper and a lower base member interconnected through an upright post member, on which a gate is linked by an upper and a lower hinge, said gate being of the type which in order to be opened should be lifted by hand and then rotated sidewards in relation to the upper and the lower hinge.

Child safety gates are used as a temporary barrier of doorways, stairways, windows, and similar openings to deny small children and animals access by inserting and securing the barrier in the opening.

There are known child safety barriers which comprise a frame with a central gate and there are also known barriers, where the gate is located at one side thereof.

The purpose of the invention has been to make these gates more safe. Accordingly, by the invention there has been provided a barrier with a special hinge construction which prevents buckling at the hinge, and the barrier has also a special closing mechanism having an extra protection against unintended opening and finally the barrier comprises an indicator device to indicate the clamping in the opening.

The purpose is achieved by a child safety barrier of the type stated in the introductory part of claim 1, which is characterized in that the upper hinge consists of a first and a second hinge part, the second hinge part being fastened to the upright post member and the first hinge part being mounted to the gate, and in that the second hinge part has a fin projecting upwards and being releasably engaged in a corresponding slot provided in the first hinge part.

Expedient embodiments of the invention are defined in claims 2 - 6.

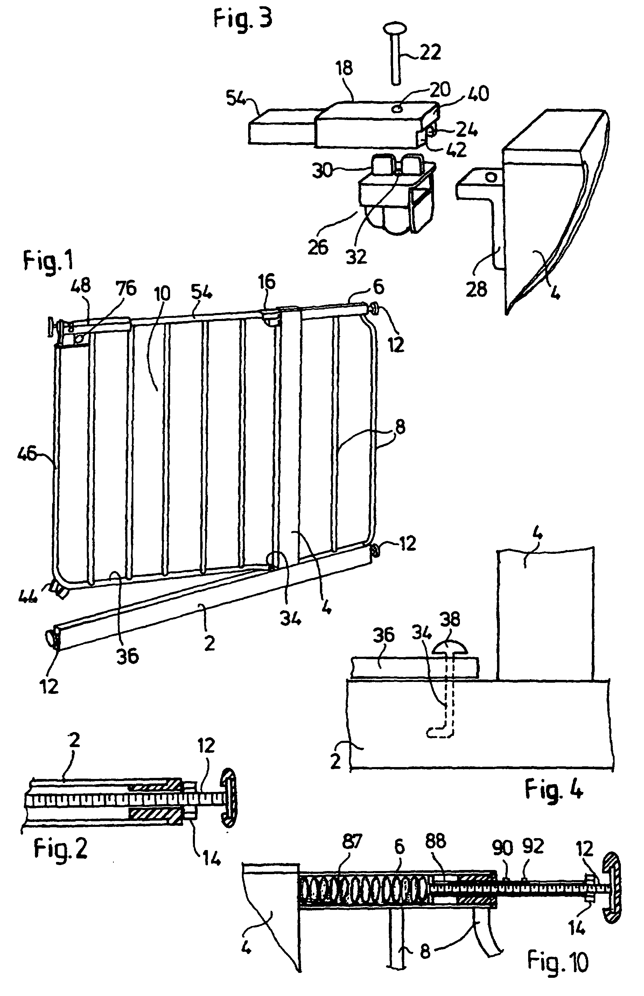

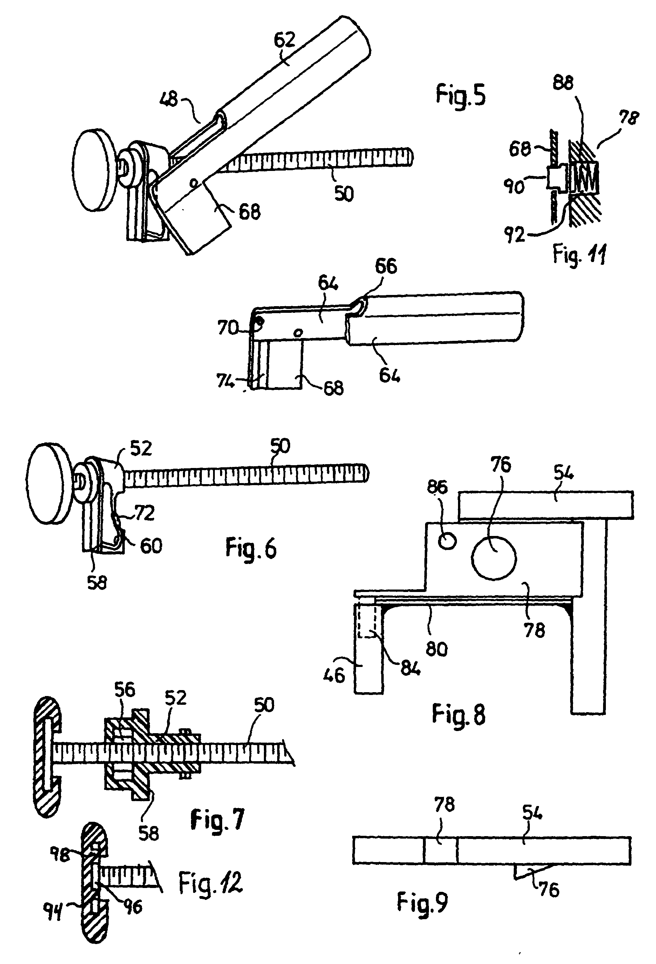

Embodiments of the invention shall be explained further below with reference to the enclosed drawings comprising the figures 1-12.

The child safety barrier includes a frame comprising a base member 2 with an upright post member 4 and by the upper end of this a short upper rod reaching to the one side. The space between the upper and base member is filled up with vertical rods. On the other side of the post a gate 10 is hinged.

For fastening of the barrier in the opening there is in each corner of the plane of the barrier, i.e. in both ends of the base member 2 and the free end of the upper member a threaded rod 12 with a friction block, said threaded rods can be pulled in and out and fixed by means of a counter nut 14 so that the length can be adjusted to the size of actual opening.

The gate comprises a closing mechanism which has also a corresponding threaded bar with a friction block which can be pulled in and out and fixed with a counter nut, and which by means of the closing mechanism can be clamped against the opening.

At the top the gate is hinged to the post by means of a specially designed hinge 16. A substantially tube shaped hinge part 18 of plastic with a hole 20 for a pivot 22 is mounted over the upper rod of the gate. At this location the hinge part is solid. On the lower part of the hinge part there is a slot 24. The other hinge part 26 is attached to the post 4, on to which an angle 28 is welded. The hinge part has a pocket, by means of which this can be slipped in over the perpendicularly projecting flap of the angle on the post. On the upper part of the hinge part there is a fin 30 projecting upwards, which fits loosely up into the slot 24 on the other hinge part. There is also a through-going hole 32 for the pivot 22. The hole is carried through the angle so that the hinge part is fixed by means of the pivot 22. On the lower side of the hinge part the hole is continued in a tube section and at the back there is a contact surface facing the post or more precisely the angle. Furthermore, there is a reinforcing rib. The pivot 22 is attached by tight fitting or by screwing it into the upper part 18 of the hinge, and in the closing position of the gate the pivot is still hidden in the hinge, i.e. the pivot does not project beneath the hinge.

At the bottom the gate is hinged to the base member by means of a pivot 34 situated through a hole in the bottom rod 36 of the gate further down through a hole in the top side of the base member 2 of the frame. The end of the pivot 34 is bend to the side so that it function as a stop for pulling up the gate. The pivot is inserted by manipulating it through the hole in the bottom rod of the gate and further town into the bottom rod of the frame. The pivot 34 can be welded to the gate by the head.

To open the barrier the gate is lifted by means of which the upper part of the hinge is lifted clear of the fin 30 on the lower part 26. When the gate is swung open the upper part 18 will be riding on the fin 30. The vertical lift of the gate is as mentioned limited by the pivot 34 in the bottom hinging of the gate. In the closed position of the gate the hinge is fixed against sideways deflection as the fin 30 here is situated in the slot 24 on the under side of the upper part 18 of the hinge. Furthermore, the forces appearing in the upper member of the gate will be transmitted directly to the vertical post 4, as the rear edge of the upper hinge part is at the top shaped as an planar contact plane 40 for contact against the pillar whereas the edge at the slot region is shaped as rounded sliding surfaces 42 situated within the contact plane. In the opening position the contact plane 40 is lifted above the pillar 4 and by swinging up the gate, the sliding surface 42 will slide upon the pillar. Altogether, the upper part of the barrier will in closed position stand as a nearly rigid through-going connection comprising the upper rod of the gate, the upper part of the pillar and the upper rod of the frame.

In closed position the front corner at the below of the gate is secured against deflection by means of an U-shaped fittings gripping around the top side of the base member 2. By lifting the gate for its opening, the fittings 44 goes clear of the base member. The fittings 44 is positioned on the rounding where the lower rod of the gate continue into the front rod 46, by means of which the wedge-shaped space next to the base member is blocked so that children cannot get their toes or fingers caught in the gate.

As stated earlier, the gate comprises a closing mechanism 48, which also has a threaded bar 50 with a friction block. The thread block is situated in a through-going hole in a sliding element 52 and sticks with its end into the upper rod 54. In the element 52 a nut 56 is casted in so that the threaded bar can be screwed in and out to fit the actual size of an opening. At the front the element has a sideways projecting cross wall 58, to which in each side a recess with a camface 60 is contiguous. A handle 62 comprises two parallel sidewalls 64, which on the rear section is connected with a curved member 66 fitting the upper rod of the gate. At the front the sidewalls have a side plate with a projection 70 co-operating with the camface 60 in the recess on the element 52. When the handle 62 is closed, i.e. in horizontal position, the threaded bar and thereby the friction block are in their projecting locked position. By opening the gate the handle is turned thus causing the pins 70 in co-operation with the camface to pull back the threaded bar with the friction block out of contact with the opening, in which the barrier is placed. The gate can then be lifted and opened as described previously. By closing the gate the handle is pushed downwards thus causing the front edge of the sides 64 to press against the cross wall 58 of the element by means of which this is pushed forward to clamp the friction block against the opening. On the edge of the element there is a projection 72 co-operation with a slot 74 in the side plates. In closed position the projections are positioned in the slot. By lifting the handle to open the gate, the projections 72 will counter act this. Only with an extra firm grip on the handle it will be possible to swing it upwards as the sidewalls thereby are forced from each other and slide on top of the projections. Contrary the projections will cooperate in causing the handle to shut with a "snap effect" and to remain in the closed position. As an additional securing against opening of the gate the handle is blocked by means of a spring loaded blocking knob 76 arranged in an element in the shape of flat plastic block 78. This block is firmly fixed between a projecting end of the upper rod 54 of the gate and a parallel flat iron 80 welded to the front rod 46, which is a pipe, and the neighbour rod 82 of the gate. The rear edge of the block is undercut and grips around the rod 46. At the front the block is fixed by means of a pin 84 which projects downwards into the pipe 46. The axis of rotation of the handle is embedded in a cross hole 86 in the block. The blocking knob 76 is designed as an entity with the plastic block and placed directly against the side plates 68 or designed as shown in fig. 11 as a spring-loaded 88 loose knob 90 embedded in a recess 92 in the plastic block 78, and which grips into a hole in the side plate 68 of the handle. The handle is thus blocked in the closed position. In order to open the gate two independent movements are thus necessary, ie. pushing in the blocking knob 76 as well as lifting the handle. Beyond this, the entire gate has to be lifted. The gate is hereby effectively secured against unintended opening, and at the same time it is still easy to open for an adult person. Besides being an integrated part of the plastic block, the blocking knob can of course also be shaped as a separate spring loaded knob embedded in the plastic piece.

Due to the yielding of the opening where the barrier is placed, e.g. yielding banisters, it can be difficult to decide how hard the gate has to be clamped. For this purpose the upper rod of the frame is shaped as an indicator unit. In the rod 6 a spring is embedded affecting a pipe section 88, in which the threaded bar with the friction block is situated. On the pipe there are two indication marks 90, 92, the first showing the sufficient clamping of the frame itself, the second showing sufficient clamping of the closing mechanism of the gate.

In order to improve the securing of the rubber or plastic coating 94 of the friction block on the supporting plate 96, this can be equipped with one or several holes 98, mainly three evenly distributed over the plate, and where the coating penetrates into the holes, cf. fig. 12. The coating is thus effectively secured against stripping off by sideways forces on the gate. This applies by loosely fixed coating as well as vulcanized coating.

## Claims

1. A child safety barrier comprising an upper and a lower (2) base member interconnected through an upright post member (4), on which a gate is linked by an upper (16) and a lower (34, 36) hinge, said gate being of the type which in order to be opened should be lifted by hand and then rotated sidewards in relation to the upper and the lower hinge, **characterized in that** the upper hinge consists of a first (18) and a second (26) hinge part, the second hinge part (26) being fastened to the upright post member (4) and the first hinge part being mounted to the gate, and **in that** the second hinge part (26) has a fin (30) projecting upwards and being releasably engaged in a corresponding slot (24) provided in the first hinge part (18).

2. A barrier according to claim 1, **characterized in that** the second hinge part (26) is connected to an angle (28), that in turn is connected to the post member (4).

3. A barrier according to claim 1 or 2, **characterized in that** a pivot (22) is adapted to interconnect the angle (28), the first hinge (18) part and the second hinge part through holes in the angle (28), the first (18), and the second hinge part.

4. A barrier according to claims 1 - 3, **characterized in that** the lower hinge consists of a pivot (34) that interconnects a bottom rod (36) of the gate to the base member (2), through a hole in the bottom rod and a hole in the top side of the base member (2).

5. A barrier according to claim 4, **characterized in that** the free end of the pivot has a bending.

6. A barrier according to claim 4 or 5, **characterized in that** the other end of the bottom rod (36) has an U-shaped fitting (44), that is adapted to grip around the top side of the base member (2).

## Patentansprüche

1. Sicherheitsbarriere für Kinder, umfassend ein oberes und ein unteres (2) Basisteil, die durch ein aufrechtes Pfostenteil (4) verbunden sind, an dem eine Tür oder Sperre durch ein oberes (16) und ein unteres (34, 36) Drehgelenk angelenkt ist, wobei die Tür von der Art ist, die zum Öffnen von Hand anzuheben und dann seitwärts relativ zu dem oberen und dem unteren Drehgelenk zu drehen ist, **dadurch gekennzeichnet, daß** das obere Drehgelenk aus einem ersten (18) und einem zweiten (26) Drehgelenkteil besteht, wobei das zweite Drehgelenkteil (26) an dem aufrechten Pfostenteil (4) befestigt und das erste Drehgelenkteil an der Tür angebracht ist, und daß das zweite Drehgelenkteil (26) eine Rippe (30) aufweist, die sich nach oben erstreckt und lösbar in einem entsprechenden Schlitz (24) aufgenommen wird, der in dem ersten Drehgelenkteil (18) vorgesehen ist.

2. Barriere nach Anspruch 1, **dadurch gekennzeichnet, daß** das zweite Drehgelenkteil (26) mit einem Winkel (28) verbunden ist, der seinerseits mit dem Pfostenteil (4) verbunden ist.

3. Barriere nach Anspruch 1 oder 2, **dadurch gekennzeichnet, daß** ein Zapfen (22) ausgebildet ist, um den Winkel (28), das erste Drehgelenkteil (18) und das zweite Drehgelenkteil durch Löcher in dem Winkel (28), dem ersten (18) und dem zweiten Drehgelenkteil miteinander zu verbinden.

4. Barriere nach Ansprüchen 1 bis 3, **dadurch gekennzeichnet, daß** das untere Drehgelenk aus einem Zapfen (34) besteht, der eine Bodenstange (36) der Tür mit dem Basisteil (2) durch ein Loch in der Bodenstange und ein Loch in der Oberseite des Basisteils (2) verbindet.

5. Barriere nach Anspruch 4, **dadurch gekennzeichnet, daß** das freie Ende des Zapfens eine (Ab)Biegung aufweist.

6. Barriere nach Anspruch 4 oder 5, **dadurch gekennzeichnet, daß** das andere Ende der Bodenstange (36) ein U-förmiges Formstück (44) aufweist, das ausgebildet ist, um die Oberseite des Basisteils (2) herumzufassen.

## Revendications

1. Barrière de sécurité pour enfants comprenant un élément de base supérieur et un élément de base inférieur (2) interconnectés par un montant vertical (4) sur lequel un portillon est attaché par une charnière supérieure (16) et une charnière inférieure (34, 36), le portillon étant du type qui doit être soulevé à la main afin de l'ouvrir, puis tourné latéralement par rapport aux charnières supérieure et inférieure, **caractérisée en ce que** la charnière supérieure comprend une première partie (18) et une deuxième partie (26) de charnière, la deuxième partie de charnière (26) étant fixée au montant vertical (4) et la première partie de charnière étant montée sur le portillon, et **en ce que** la deuxième partie de charnière (26) comporte une languette (30) qui fait saillie vers le haut et qui s'engage de façon libérable dans une rainure correspondante (24) prévue dans la première partie de charnière (18).

2. Barrière selon la revendication 1, **caractérisée en ce que** la deuxième partie de charnière (26) est connectée à une cornière (28) qui est elle-même fixée au montant (4).

3. Barrière selon la revendication 1 ou 2, **caractérisée en ce qu'**un pivot (22) est prévu pour interconnecter la cornière (28), la première partie de charnière (18) et la deuxième partie de charnière, à travers des trous prévus dans la cornière (28), la première partie de charnière (18) et la deuxième partie de charnière.

4. Barrière selon les revendications 1 à 3, **caractérisée en ce que** la charnière inférieure consiste en un pivot (34) qui interconnecte une barre inférieure (36) du portillon à l'élément de base (2), à travers un trou prévu dans la barre inférieure et un trou prévu dans la face supérieure de l'élément de base (2).

5. Barrière selon la revendication 4, **caractérisée en ce que** l'extrémité libre du pivot est ceintrée.

6. Barrière selon la revendication 4 ou 5, **caractérisée en ce que** l'autre extrémité de la barre inférieure (36) comporte une pièce de fixation en forme de U (44) qui est prévue pour faire prise autour de la face supérieure de l'élément de base (2).
